# EUROPÄISCHE PATENTSCHRIFT

(11) **EP 2 158 999 B1**
(45) Veröffentlichungstag und Bekanntmachung des Hinweises auf die Patenterteilung: **21.09.2011**
(21) Anmeldenummer: 09009145.5
(22) Anmeldetag: 13.07.2009
(51) Int. Cl.: B23Q 17/22, B23Q 17/24, G01B 11/02

(54) **Vorrichtung zum Vermessen und/oder Einstellen eines Werkzeugs**
Device for measuring and/or configuring a tool
Dispositif de mesure et/ou de réglage d'un outil

(30) Priorität: 26.08.2008 DE 202008011332 U
(43) Veröffentlichungstag der Anmeldung: 03.03.2010
(73) Patentinhaber: DMG Microset GmbH, 33689 Bielefeld (DE)
(72) Erfinder: Kluckhuhn, Axel, 32726 Detmold (DE); Melzer, Udo, 33335 Gütersloh (DE)
(74) Vertreter: Steinmeister, Helmut

(56) Entgegenhaltungen:
- DE-A1-102005 043 112
- US-A1- 2006 188 127

## Beschreibung

Die vorliegende Erfindung betrifft eine Vorrichtung zum Vermessen und/oder Einstellen eines Werkzeugs gemäß dem Oberbegriff des Anspruchs 1 (siehe, z.B., DE-10 2005 043 112 A).

Derartige Vorrichtungen gestatten die Voreinstellung und Vermessung eines Werkzeugs vor seinem eigentlichen Einsatz in einer Bearbeitungsmaschine. Das Werkzeug wird hierzu in einem Werkzeughalter eingesetzt und mit Hilfe einer Kamera optisch vermessen. Diese befindet sich gewöhnlich in einem Messkopf an einem Schlitten, der an einer Säule vertikal beweglich ist, welche wiederum bezüglich des Werkzeughalters horizontal seitlich verfahrbar ist, so dass sich eine Beweglichkeit in einer Raumebene ergibt. Durch geeignete Messaufnehmer können die Positionen des Schlittens sowie der Säule mit hoher Genauigkeit aufgenommen werden, so dass die augenblickliche Position des Messkopfes exakt bestimmt und mit der Abbildung des Werkzeugs durch die Kamera in Beziehung gesetzt werden kann.

Voraussetzung für eine hohe Messgenauigkeit ist eine hohe Stabilität des gesamten Aufbaus, insbesondere der Führung des Messkopfes. Bei den bekannten Konstruktionen sind daher die Säule, die den Schlitten mit dem Messkopf trägt, die Schiene zur Führung der Säule usw. massiv und schwer ausgebildet. Neben einem hohen Gewicht des gesamten Aufbaus führt dies zu hohen Kosten. Eine Vereinfachung der gesamten Anordnung durch Einsatz leichterer Komponenten war bisher nicht ohne Einbußen in der Messgenauigkeit möglich.

Aufgabe der vorliegenden Erfindung ist es daher, eine Vorrichtung der eingangs genannten Art zu schaffen, die eine hohe Messgenauigkeit mit einem einfachen, leichten und kostengünstigen Aufbau vereinbart.

Diese Aufgabe wird erfindungsgemäß durch eine Vorrichtung mit den Merkmalen des Anspruchs 1 gelöst.

Die erfindungsgemäße Vorrichtung zum Vermessen und/oder Einstellen eines Werkzeugs umfaßt eine Markierungsplatte, die in einer Referenzebene parallel zur Bewegungsebene des Messkopfes liegt, so dass der Messkopf parallel zur Markierungsplatte geführt werden kann. Die Oberfläche der Markierungsplatte ist mit optisch wahrnehmbaren Markierungen versehen, die durch eine zweite Kamera aufgenommen werden können, die am Messkopf angebracht ist. Auf diese Weise läßt sich die Position des Messkopfes in Bezug auf die Markierungsplatte ermitteln. Hierzu dient ein Bildverarbeitungssystem, das aus der Abbildung der Markierungen durch die zweite Kamera die aktuelle Position des Messkopfes bestimmt.

Diese Bestimmung der Messkopfposition in Bezug auf die Markierungsplatte auf optischem Wege kann mit hoher Genauigkeit erfolgen. Auf Messaufnehmer, die in der Halterung des Messkopfes zur Messung seiner Stellung in den jeweiligen Raumrichtungen vorgesehen sind, kann bei der vorliegenden Vorrichtung verzichtet werden. Die Anforderungen an die Stabilität der Messkopfhalterung sind insgesamt geringer, und der Aufbau kann mit einfacheren und leichteren Komponenten erfolgen als bisher, was wiederum zu Kosteneinsparungen führt. Denkbar ist beispielsweise, den Messkopf an einem Schwenkarm mit mehreren Gliedern anzubringen, die durch Gelenke verbunden sind. Eine solche Konstruktion läßt sich einfacher realisieren als die bisher üblichen Vorrichtungen, die massive Säule mit einem verfahrbaren Schlitten zur Messkopfpositionierung umfassen.

In einer bevorzugten Ausführungsform der Erfindung ist das Werkzeug zwischen der Bewegungsebene des Messkopfes und der Referenzebene angeordnet.

Das Werkzeug befindet sich in diesem Fall im Raum zwischen der Ebene, in der sich der Messkopf bewegt, und der Markierungsplatte. Hierbei muß die zweite Kamera die Markierungen im Hintergrund des Werkzeugs erfassen.

In einer weiteren bevorzugten Ausführungsform umfaßt der Messkopf zwei Teile, die einen Raum zur Aufnahme des Werkzeugs von zwei Seiten begrenzen und von denen ein der Markierungsplatte zugewandter Teil die auf die Markierungsplatte gerichtete zweite Kamera und ein der Markierungsplatte abgewandter Teil die auf das Werkzeug zu richtende erste Kamera umfaßt.

Die beiden Kameras sind in diesem Fall also in verschiedenen Teilen des Messkopfes angeordnet, die das Werkzeug beidseitig umgreifen können. Dies bietet den Vorteil, dass die zweite Kamera die Markierungen ohne Behinderung durch das Werkzeug aufnehmen kann.

Vorzugsweise ist hierbei der Messkopf etwa gabelförmig ausgebildet, wobei jeweils ein Schenkel der Gabel eine der beiden Kameras aufnimmt.

Der Teil des Messkopfes, der der Markierungsplatte zugewandt ist, kann hierbei vorzugsweise an seiner Innenseite mit einer Lichtquelle versehen sein, die der ersten Kamera zugewandt ist.

Bei dieser Anordnung sind die erste Kamera zur Werkzeugabbildung und die Lichtquelle an den gegenüberliegenden Innenseiten des zweiteiligen Messkopfes, d.h. an den gegenüberliegenden Seiten des Raums zur Aufnahme des Werkzeugs angeordnet. Dies ermöglicht eine Abbildung des Werkzeugs im Durchlichtverfahren.

In einer weiteren bevorzugten Ausführungsform können die beiden Kameras auf einer gemeinsamen optischen Achse liegen, die senkrecht zu der Referenzebene steht.

Vorzugsweise kann der Messkopf von einem mehrgliedrigen Arm getragen werden, dessen Glieder durch Gelenke verbunden sind.

Im folgenden wird eine bevorzugte Ausführungsform der Erfindung anhand der Zeichnung näher erläutert.
- Fig. 1: ist eine schematische Ansicht einer Ausführungsform der erfindungsgemäßen Vorrichtung von oben; und
- Fig. 2: ist eine schematische Ansicht einer weiteren Ausführungs- form der erfindungsgemäßen Vorrichtung aus einer Perspektive entsprechend Fig. 1.

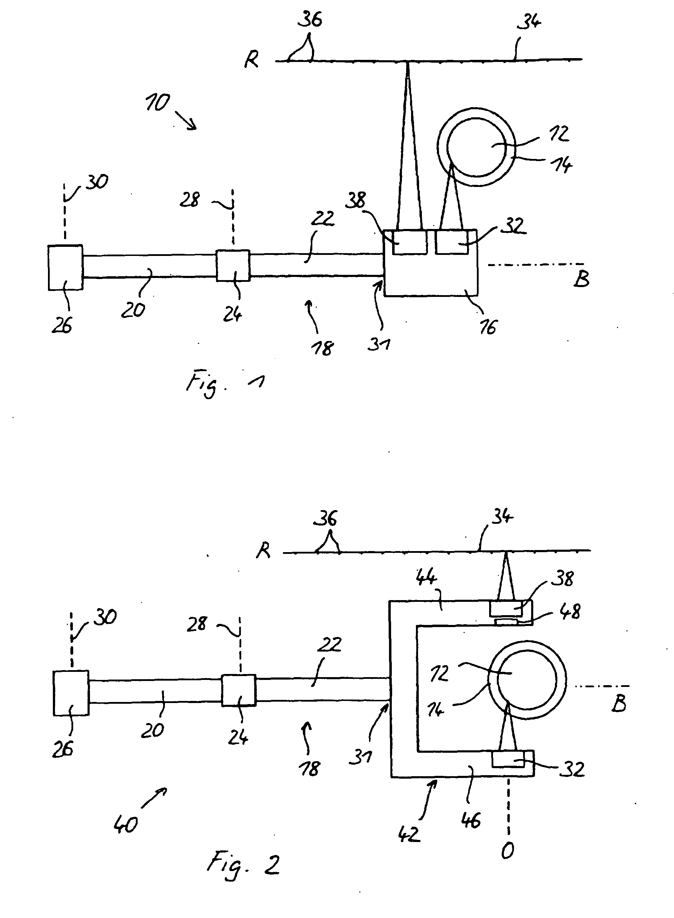

Die in Fig. 1 dargestellte Vorrichtung 10 dient zum Vermessen und/oder Einstellen eines Werkzeugs 12, das in einem Werkzeughalter 14 gehalten wird. Der Werkzeughalter 14, der hier von oben sichtbar ist, umfaßt Spannvorrichtungen zum Halten des Werkzeugs 12 und ist auf einer nicht näher dargestellten Basis der Vorrichtung 10 installiert.

Die Vorrichtung 10 umfaßt ferner einen Messkopf 16 zum optischen Ausmessen des Werkzeugs 12. Der Messkopf 16 wird von einem Arm 18 getragen, der es gestattet, den Messkopf 16 in einer senkrechten Raumebene B zu bewegen, die im folgenden auch als Bewegungsebene bezeichnet werden soll. Der Arm 18 umfaßt im vorliegenden Fall zwei Glieder 20,22. die durch ein Gelenk 24 voneinander getrennt sind und somit gegeneinander abgewinkelt werden können. Das in Fig. 1 linke Glied 20 ist selbst durch ein weiteres Gelenk 26 mit der Basis verbunden. Die beiden Schwenkachsen 28,30 der Gelenke 24 und 26 stehen parallel zueinander und senkrecht zur Bewegungsebene B. Durch Verschwenken der Glieder 20,22 des Arms 18 mit Hilfe der Gelenke 24,26 kann der Messkopf 16 innerhalb der Bewegungsebene B frei positioniert werden. Ein drittes Gelenk 31 im Messkopf 16 kann dazu dienen, den Messkopf 16 unabhängig von der Winkelstellung des zweiten Glieds 22 des Arms 18 auszurichten.

Der Messkopf 16 trägt eine erste Kamera 32 zur Abbildung des Werkzeugs 12. Diese Abbildung kann auf einen Bildschirm übertragen und durch ein Bildverarbeitungssystem zur Vermessung des Werkzeugs 12 verarbeitet werden.

In einer Ebene, die parallel zur Bewegungsebene B des Messkopfes 16 liegt, liegt eine Markierungsplatte 34. Diese ist auf der Seite, die dem Messkopf 16 zugewandt ist, mit einer Anzahl optisch wahrnehmbarer Markierungen 36 versehen, die beispielsweise in einem Raster angeordnet sind. Die Ebene, in der die Markierungsplatte 34 liegt, soll im folgenden als Referenzebene R bezeichnet werden. Das Werkzeug 12 ist in dem Raum angeordnet, der beidseitig durch die senkrechten Ebenen B und R begrenzt wird. Aus der Perspektive des Messkopfes 16 befindet sich das Werkzeug 12 somit vor der Markierungsplatte 34, die bei der Abbildung des Werkzeugs 12 durch die erste Kamera 32 den Hintergrund bildet. Bezüglich der Basis der Vorrichtung ist die Markierungsplatte 34 ortsfest installiert.

Der Messkopf 16 trägt eine zweite Kamera 38, die auf die Markierungsplatte 34 gerichtet ist und zur Abbildung der Markierungen 36 dient. Da die Markierungsplatte 34 ortsfest ist, kann aus einer Abbildung der Markierungen 36 durch die zweite Kamera 38 die aktuelle Position des Messkopfes 16 in seiner Bewegungsebene B ermittelt werden. Dies kann durch das Bildverarbeitungssystem erfolgen, welches ferner auch die Abbildungsdaten der ersten Kamera 32 mit denjenigen der zweiten Kamera 38 in Beziehung setzen kann. Auf diese Weise können nicht nur verschiedene Messpunkte am Werkzeug 12 miteinander, sondern auch mit Referenzpunkten der Markierungsplatte 34 in Beziehung gesetzt werden. Ferner ist es möglich, die Winkelstellung des Messkopfes 16 in der Bewegungsebene B in Bezug auf die Markierungsplatte 34 zu bestimmen, indem die Bildverarbeitungssoftware aus der Lage der Markierungen 36 in der Abbildung der zweiten Kamera 38 einen Drehwinkel des Messkopfes 16 errechnet. Zweckmäßigerweise umfassen die Markierungen 36 hierzu ein Linienraster. Auf ein Gelenk 31 im Messkopf 16 zur Korrektur von dessen Winkelstellung kann in diesem Fall verzichtet werden.

Die Ausführungsform gemäß Fig. 2 umfaßt eine Vorrichtung 40 zum Vermessen und/oder Einstellen eines Werkzeugs 12, bei welcher der Messkopf 42 anders ausgebildet als bei der Vorrichtung 10 in Fig. 1. Der Messkopf 42 wird ebenfalls von einem Arm 18 mit zwei Gliedern 20,22 getragen, die durch ein Gelenk 24 voneinander getrennt und durch ein weiteres Gelenk 26 mit der Basis verbunden sind. Diesbezüglich kann auf Fig. 1 verwiesen werden. Ferner kann auch bei der vorliegenden Ausführungsform der Messkopf 42 durch ein drittes Gelenk 31 mit dem äußersten Glied 22 des Arms 18 verbunden sein, um den Messkopf 42 unabhängig von der Stellung der Glieder 20,22 stets in der gleichen Ausrichtung zu halten.

Der Messkopf 42 ist im vorliegenden Fall gabelförmig ausgebildet und umfaßt einen ersten Schenkel 44, der der Markierungsplatte 34 zugewandt ist, sowie einen zweiten Schenkel 46, der etwa parallel zum ersten Schenkel 44 steht und der Markierungsplatte 34 abgewandt ist. Die beiden Schenkel 44,46 begrenzen von zwei Seiten einen Raum, in welchem sich der Werkzeughalter 14 mit dem Werkzeug 12 befindet. Der Messkopf 42 kann somit in seiner Bewegungsebene B seitlich über das Werkzeug 12 geführt werden, so dass dieses sich zwischen den Schenkeln 44,46 befindet.

Die erste Kamera 32 zur Abbildung des Werkzeugs 12 befindet sich im zweiten Schenkel 46 und ist zur Innenseite des Messkopfs 42 gerichtet, so dass das Werkzeug 12, das von den beiden Schenkeln 44,46 umfaßt wird, durch die erste Kamera 32 abgebildet werden kann. Zur Abbildung im Durchlichtverfahren ist im ersten Schenkel 44 eine Lichtquelle 48 angebracht, die sich im wesentlichen auf der optischen Achse O der Optik der ersten Kamera 32 befindet.

Im ersten Schenkel 44 ist ferner die zweite Kamera 38 zur Abbildung der Markierungen 36 der Markierungsplatte 34 untergebracht. Die beiden Kameras 32 und 38 sind somit beide in Richtung der Markierungsplatte 34 ausgerichtet und weisen die gleiche optische Achse O auf. Diese optische Achse O steht senkrecht zur Bewegungsebene B des Messkopfes 42 und der Referenzebene R, in welcher sich die basisfeste Markierungsplatte 34 befindet.

Die Anordnung in Fig. 2 bietet den Vorteil, dass die Abbildung des Werkzeugs 12 durch die erste Kamera 32 völlig unabhängig von der Abbildung der Markierungen 36 durch die zweite Kamera 38 erfolgen kann. Dies kann aus praktischen Gründen erforderlich sein. Der erste Schenkel 44, der die zweite Kamera 38 trägt, kann zudem relativ dicht vor der Markierungsplatte 34 geführt werden.

Die erfindungsgemäße Vorrichtung 10,42 gestattet eine Bestimmung der Position des Messkopfes 16,42 in Bezug auf die Markierungsplatte 34 und damit bezüglich einer festen Basis, ohne dass Messaufnehmer in der Führung und Halterung des Messkopfes 16,42 erforderlich sind. Der Arm 18 kann damit relativ einfach und kostengünstig aufgebaut sein. Ermöglicht wird insbesondere eine Positionierung und Führung des Messkopfes 16,42 an einem Arm 18 mit geringerer Stabilität, als es bei den bisher bekannten Vorrichtungen möglich war, ohne dass Einbussen in der Messgenauigkeit hingenommen werden müssen.

## Patentansprüche

1. Vorrichtung (10,40) zum Vermessen und/oder Einstellen eines Werkzeugs (12), mit einer auf das Werkzeug (12) zu richtenden ersten Kamera (32), die von einem Messkopf (16,42) getragen wird, der bezüglich des Werkzeugs (12) zumindest in einer Raumebene (B) beweglich ist, mit einer Markierungsplatte (34), die in einer Referenzebene (R) parallel zur Bewegungsebene (B) des Messkopfes (16,24) liegt und deren Oberfläche mit optisch wahrnehmbaren Markierungen (36) versehen ist, **gekennzeichnet durch** eine zweite Kamera (38), die vom Messkopf (16,42) getragen wird und auf die Markierungsplatte (34) gerichtet ist, sowie **durch** ein Bildverarbeitungssystem zur Ermittlung der Position des Messkopfes (16,24) aus einer Abbildung der Markierungen (36) durch die zweite Kamera (38).

2. Vorrichtung gemäß Anspruch 1, **dadurch gekennzeichnet**, das das Werkzeug (12) zwischen der Bewegungsebene (B) des Messkopfes (16,42) und der Referenzebene (R) angeordnet ist.

3. Vorrichtung gemäß Anspruch 1, **dadurch gekennzeichnet, dass** der Messkopf (42) zwei Teile (44,46) umfasst, die einen Raum zur Aufnahme des Werkzeugs (12) von zwei Seiten begrenzen und von denen ein der Markierungsplatte (34) zugewandter Teil die auf die Markierungsplatte (34) gerichtete zweite Kamera (38) und ein der Markierungsplatte (34) abgewandter Teil (46) die auf das Werkzeug (12) zu richtende erste Kamera (32) umfasst.

4. Vorrichtung gemäß Anspruch 3, **dadurch gekennzeichnet, dass** der Messkopf (42) etwa gabelförmig ausgebildet ist, wobei jeweils ein Schenkel (44,46) der Gabel eine der beiden Kameras (32,38) aufnimmt.

5. Vorrichtung gemäß Anspruch 3 oder 4, **dadurch gekennzeichnet, dass** der der Markierungsplatte (34) zugewandte Teil (44) des Messkopfes an seiner Innenseite mit einer Lichtquelle (48) versehen ist, die auf die erste Kamera (32) gerichtet ist.

6. Vorrichtung gemäß einem der Ansprüche 3 bis 5, **dadurch gekennzeichnet, dass** die beiden Kameras (32,38) auf einer gemeinsamen optischen Achse O liegen, die senkrecht zu der Referenzebene (R) steht.

7. Vorrichtung gemäß einem der vorhergehenden Ansprüche, **dadurch gekennzeichnet, dass** der Messkopf (16,42) von einem mehrgliedrigen Arm (18) getragen wird, dessen Glieder (20,22) durch Gelenke (24) verbunden sind.

## Claims

1. Device (10,40) for measuring and/or configuring a tool (12), comprising a camera (32) disposed to be directed to the tool (12), said camera (32) being supported by a measuring head (16,42) that is moveable with respect to the tool (12) at least within one plane (B), further comprising a marker plate (34) arranged in a reference plane (R) parallel to the movement plane (B) of the measuring head (16,24), the surface of said marker plate (34) providing optically conceivable markers (36), **characterized by** a second camera (38) supported by the measuring head (16,24) and being directed to the marker plate (34), as well as by a image processing system for determining the position of the measuring head (16,24) from an image of the marker (36) taken from the second camera (38).

2. Device according to claim 1, **characterized in that** the tool (12) is arranged between the movement plane (B) of the measuring head (16,42) and the reference plane (R).

3. Device according to claim 1, **characterized in that** the measuring head (42) comprises two parts (44,46) delimiting a space for receiving the tool (12) from two sides, one of these parts facing the marker plate (34) comprising the second camera (38) that is directed to the marker plate (34) and another part (46) facing away from the marker plate (34) comprising the first camera (32) directed to the tool (12).

4. Device according to claim 3, **characterized in that** the measuring head (42) is generally fork-shaped, each arm (44,46) of the fork comprising one of the two cameras (32,38).

5. Device according to claim 3 or 4, **characterized in that** the part (44) of the measuring head facing the marker plate (34) is provided with a light source (48) at his inner side, said light source being directed to the first camera (32).

6. Device according to one of the claims 3 to 5, **characterized in that** the two cameras (32,38) lie on the same optical axis (O) standing particular to the reference plane (R).

7. Device according to one of the preceding claims, **characterized in that** the measuring head (16,42) is supported by an arm (18) with multiple limbs, said limbs (20,22) being connected by joints (24).

## Revendications

1. Dispositif (10, 40) de mesure et/ou de réglage d'un outil (12), comportant une première caméra (32) à diriger sur l'outil (12), laquelle première caméra est portée par une tête de mesure (16, 42) mobile par rapport à l'outil (12) au moins dans un plan spatial (B), comportant une plaque de marquage (34) située dans un plan de référence (R) parallèle au plan de déplacement (B) de la tête de mesure (16, 24) et dont la surface est munie de marquages optiquement visibles (36), **caractérisé par** une seconde caméra (38) portée par la tête de mesure (16, 42) et orientée sur la plaque de marquage (34), ainsi que par un système de traitement d'image pour déterminer la position de la tête de mesure (16, 24) à partir d'une imagerie des marquages (36) produite par la seconde caméra (38).

2. Dispositif selon la revendication 1, **caractérisé en ce que** l'outil (12) est agencé entre le plan de déplacement (B) de la tête de mesure (16, 42) et le plan de référence (R).

3. Dispositif selon la revendication 1, **caractérisé en ce que** la tête de mesure (42) comporte deux parties (44, 46) délimitant un espace pour recevoir l'outil (12) des deux côtés, et à partir desquelles une partie dirigée vers la plaque de marquage (34) comporte la seconde caméra (38) dirigée sur la plaque de marquage (34), et une partie (46) opposée à la plaque de marquage (34) comporte la première caméra (32) à diriger sur l'outil (12).

4. Dispositif selon la revendication 3, **caractérisé en ce que** la tête de mesure (42) est configurée sensiblement en forme de fourche, dans lequel chaque branche (44, 46) de la fourche reçoit l'une des deux caméras (32, 38).

5. Dispositif selon la revendication 3 ou 4, **caractérisé en ce que** la partie (44) de la tête de mesure opposée à la plaque de marquage (34) est munie d'une source lumineuse (48) sur son côté intérieur, laquelle source lumineuse est dirigée sur la première caméra (32).

6. Dispositif selon l'une quelconque des revendications 3 à 5, **caractérisé en ce que** les deux caméras (32, 38) se situent sur un axe optique commun O qui est perpendiculaire au plan de référence (R).

7. Dispositif selon l'une quelconque des revendications précédentes, **caractérisé en ce que** la tête de mesure (16, 42) est portée par un bras à plusieurs éléments (18) dont les éléments (20, 22) sont reliés par des articulations (24).
